(19) Europäisches Patentamt / European Patent Office / Office européen des brevets

(11) **EP 1 947 127 B1**

(12) **EUROPEAN PATENT SPECIFICATION**

(45) Date of publication and mention of the grant of the patent:
**30.03.2011 Bulletin 2011/13**

(21) Application number: **06822348.6**

(22) Date of filing: **26.10.2006**

(51) Int Cl.:
*C08G 18/42* (2006.01)    *B29C 44/00* (2006.01)
*B29K 75/00* (2006.01)    *C08G 101/00* (2006.01)
*C08L 101/16* (2006.01)

(86) International application number:
**PCT/JP2006/321372**

(87) International publication number:
**WO 2007/049694 (03.05.2007 Gazette 2007/18)**

(54) **EXPANDED POLYHYDROXYALKANOATE RESIN BEAD, MOLDED OBJECT THEREOF, AND PROCESS FOR PRODUCING THE EXPANDED RESIN BEAD**

EXPANDIERTE POLYHYDROXYALKANOATHARZPERLE, FORMKÖRPER DARAUS UND VERFAHREN ZUR HERSTELLUNG DER EXPANDIERTEN HARZPERLE

GRAIN DE RESINE POLYHYDROXYALCANOATE EXPANSE, OBJET MOULE OBTENU A PARTIR DE CELUI-CI ET PROCEDE DE FABRICATION DUDIT GRAIN DE RESINE

(84) Designated Contracting States:
**AT BE BG CH CY CZ DE DK EE ES FI FR GB GR HU IE IS IT LI LT LU LV MC NL PL PT RO SE SI SK TR**

(30) Priority: **26.10.2005 JP 2005310613**

(43) Date of publication of application:
**23.07.2008 Bulletin 2008/30**

(73) Proprietor: **Kaneka Corporation**
**Kita-ku**
**Osaka-shi, Osaka 530-8288 (JP)**

(72) Inventors:
• **MIYAGAWA, Toshio**
  **Osaka 566-0022 (JP)**
• **HIROSE, Fuminobu**
  **Osaka 566-0072 (JP)**
• **SENDA, Kenichi**
  **Osaka 573-0084 (JP)**

(74) Representative: **Vossius & Partner**
**Siebertstrasse 4**
**81675 München (DE)**

(56) References cited:
**EP-A1- 1 873 195**     **DE-A1- 4 307 648**
**JP-A- 03 281 638**      **JP-A- 09 263 651**
**JP-A- 63 004 909**      **JP-A- 2000 095 891**
**JP-A- 2003 082 150**    **JP-A- 2003 327 737**
**JP-A- 2004 161 802**    **JP-A- 2004 331 757**
**JP-A- 2004 346 102**    **JP-A- 2005 008 869**
**US-A1- 2002 035 231**

• **HIRT T D ET AL: "Synthesis of degradable, biocompatible, and tough block-copolyesterurethanes" MACROMOLECULAR CHEMISTRY AND PHYSICS, WILEY-VCH VERLAG, WEINHEIM, DE, vol. 197, no. 12, 1 December 1996 (1996-12-01), pages 4253-4268, XP002355763 ISSN: 1022-1352**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# EP 1 947 127 B1

**Description**

The present invention relates to foamed particles of a polyhydroxyalkanoate resin of vegetable origin which exhibit biodegradability, and a molded product thereof and a method of producing the resin foamed particles.

Among plastic waste, foamed plastics which have been used for packaging containers, shock absorbers, cushioning materials and the like in large quantities have been socially problematic because of bulkiness, and thus solution of such problems has been desired. Therefore, researches on foamed plastics which exhibit biodegradability have been extensively conducted. Thus far, extruded foams and in-mold formed foams with foamed particles of aliphatic polyester-based resins, mixed resins of starch and a plastic and the like have been studied.

Known conventional arts in connection with foamed particles of a biodegradable aliphatic polyester resin obtained by synthesis with a raw material derived from petroleum, and a molded product thereof involve: foamed particles obtained by crosslinking using an organic peroxide or the like for improving the foamability, and molded products thereof (Patent Documents 1 to 3); aliphatic polyester foamable particles having a certain melt viscosity obtained using diisocyanate as a linking agent, and by increasing the molecular weight (Patent Document 4); polylactic acid foamed particles produced by using polyisocyanate, a polyhydric alcohol, a polyvalent carboxylic acid or the like as a crosslinking agent, and molded products thereof (Patent Documents 5 to 14).

Poly(3-hydroxyalkanoate (hereinafter, P3HA) produced by a microorganism is a plastic which is excellent in water resistance and resistance to water vapor permeability, degradable under any of the aerobic and anaerobic conditions, and derived from a microorganism which uses a plant material. For example, Patent Document 15 discloses a method for obtaining foamed particles having two melting points using poly(3-hydroxybutyrate-co-3-hydroxyhexanoate) (hereinafter, abbreviated to PHBH), which is a kind of P3HA, in a pressure tight container through using water as a dispersion medium, and isobutane as a foaming agent.

According to this method, foamed particles with high quality can be obtained by controlling crystallinity, and further, a favorable molded product can be obtained by molding such particles. However, there are still problems of post mold shrinkage, narrow range of variation of processing in the molding, and the like. Patent Document 16 discloses that post mold shrinkage can be reduced, and the range of variation of processing in the molding can be extended by modifying a P3HA resin such as a PHBH resin using an isocyanate compound such as polyisocyanate.

Patent Document 1: Japanese Unexamined Patent Application No. Hei 10-324766
Patent Document 2: Japanese Unexamined Patent Application No. 2001-106821
Patent Document 3: Japanese Unexamined Patent Application No. 2004-10798
Patent Document 4: Japanese Unexamined Patent Application No. Hei 6-248106
Patent Document 5: Pamphlet of International Publication No. 99/21915
Patent Document 6: Japanese Unexamined Patent Application No. 2000-169546
Patent Document 7: Japanese Unexamined Patent Application No. 2000-17039
Patent Document 8: Japanese Unexamined Patent Application No. 2000-230029
Patent Document 9: Japanese Unexamined Patent Application No. 2001-98044
Patent Document 10: Japanese Unexamined Patent Application No. 2002-327037
Patent Document 11: Japanese Unexamined Patent Application No. 2003-253107
Patent Document 12: Japanese Unexamined Patent Application No. 2004-107430
Patent Document 13: Japanese Unexamined Patent Application No. 2004-107505
Patent Document 14: Japanese Unexamined Patent Application No. 2004-149649
Patent Document 15: Japanese Unexamined Patent Application No. 2000-319438
Patent Document 16: International Application No. PCT/JP2006/307549 Specification

US 2002/0035231 described polyurethane compounds obtained by reacting an isocyanate compound with a biodegradable polyhydroxyalkanoate, and in particular poly(3-hydroxybutyrate). Such polyurethane compounds can be used in foam applications.

An object of the present invention is to provide foamed particles of a resin of vegetable origin, being biodegradable and excellent in environmental compatibility, which is a P3HA resin modified using an isocyanate compound, the particles being readily molded into a P3HA resin-foamed particle molded product.

The present inventors elaborately investigated in order to solve the aforementioned problems, and consequently found that a molded product having a high degree of foaming can be obtained by using a P3HA resin composition prepared by mixing P3HA with an isocyanate compound to impart a predetermined melt viscosity and to produce foamed particles having a high gel fraction, whereby a foamed molded product can be obtained which is accompanied by no post mold shrinkage, with a wide range of variation of processing in the molding. Accordingly, the present invention was accomplished.

Thus, a first aspect of the present invention is directed to P3HA resin foamed particles comprising a P3HA resin composition that includes a copolymer (hereinafter, poly(3-hydroxyalkanoate): abbreviated to P3HA) having one or more kinds of recurring unit(s) represented by the formula (1):

$$[-O-CHR-CH_2-CO-]$$

(wherein, R is an alkyl group represented by $C_nH2_{n+1}$, wherein n is an integer of from 1 to 15) produced by a microorganism; and an isocyanate compound,
the P3HA resin composition having a melt viscosity of equal to or greater than 500 Pa·s measured under a condition of a shear rate of 122 sec$^{-1}$, at Tm1 or higher and Tm2 or lower, wherein Tm1 is the melting temperature of the P3HA resin composition; Tm2 = Tm1 + 20°C; and Tm2 < 180°C.

A second aspect of the present invention is directed to P3HA resin foamed particles comprising a P3HA resin composition that includes poly(3-hydroxybutyrate) (hereinafter, abbreviated to PHB), and a copolymer (hereinafter, poly (3-hydroxyalkanoate): abbreviated to P3HA) having one or more kinds of recurring unit(s) represented by the formula (1):

$$[-O-CHR-CH_2-CO-]$$

(wherein, R is an alkyl group represented by $C_nH2_{n+1}$, wherein n is an integer of from 1 to 15), produced by a microorganism; and an isocyanate compound,
the P3HA resin composition having a melt viscosity of equal to or greater than 500 Pa·s measured under a condition of a shear rate of 122 sec$^{-1}$, at Tm1 or higher and Tm2 or lower, wherein Tm1 is the melting temperature of the P3HA resin composition; Tm2 = Tm1 + 20°C; and Tm2 < 180°C.

Preferable P3HA resin foamed particles include those in the followings:

(1) the P3HA resin foamed particles in which P3HA is poly(3-hydroxybutyrate-co-3-hydroxyhexanoate) (hereinafter, abbreviated to PHBH) composed of a monomer wherein n is 1 and 3;
(2) the P3HA resin foamed particles having a gel fraction of greater than 80%; and
(3) the P3HA resin foamed particles having a composition ratio of the components of the PHBH copolymer in terms of 3-hydroxybutyrate/3-hydroxyhexanoate being 80/20 or greater and 99/1 or less (mol/ mol).

A third aspect of the present invention is directed to a molded product of P3HA resin foamed particles obtained by charging the aforementioned P3HA resin foamed particles into a mold, followed by heat molding.

A fourth aspect of the present invention is directed to a method of producing the P3HA resin foamed particles comprising: allowing resin particles, which are composed of a P3HA resin composition as a substrate resin, to be dispersed in an aqueous dispersion medium in an airtight container together with a dispersant; introducing a foaming agent into the airtight container; heating to not lower than the softening temperature of the substrate resin; and thereafter opening one end of the airtight container so as to release the resin particles and the aqueous dispersion medium to an atmosphere with a pressure lower than the pressure in the airtight container, thereby allowing the resin particles to be foamed.

According to the present invention, a molded product having a high degree of foaming can be attained, and P3HA resin-foamed molded product can be stably obtained which is accompanied by no post mold shrinkage, with a wide range of variation of processing in the molding. Because P3HA is used as a substrate resin, resin foamed particles of vegetable origin which are excellent in heat resistance, water resistance as well as in environmental compatibility, and a molded product thereof can be obtained.

When a mixture of poly(3-hydroxybutyrate) (PHB) and at least one kind of P3HA (other than PHB) is used, shrinkage of the molded product can be further inhibited. P3HA may yield a little shrinkage of the resulting foamed molded product depending on the production conditions even though a treatment with an isocyanate compound is carried out. In such a case, the shrinkage of the foamed molded product can be suppressed when PHB is used in combination.

Poly(3-hydroxyalkanoate) (P3HA) according to the present invention is an aliphatic polyester which is produced by a microorganism and has one or more kinds of recurring unit(s) consisting of 3-hydroxyalkanoate represented by the formula (1):

$$[-CHR\ CH_2-CO-O-] \qquad (1)$$

wherein, R is an alkyl group represented by $C_nH2_{n+1}$, wherein n is an integer of from 1 to 15.

As P3HA according to the present invention, a homopolymer of 3-hydroxyalkanoate; a copolymer constituted with a combination of two or more kinds of 3-hydroxyalkanoate represented by the above formula (1) wherein each of n represents different integers, i.e., a di-copolymer, a tri-copolymer, a tetra-copolymer; or a blend including two or more selected from these homopolymers and copolymers may be exemplified. Among these, the homopolymer such as 3-hydroxybutyrate in which n is 1, 3-hydroxyvalylate in which n is 2, 3-hydroxyhexanoate in which n is 3, 3-hydroxyoctanoate in which n is 5, or 3-hydroxyoctadecanoate in which n is 15, or the copolymer including a combination of two or more of the aforementioned 3-hydroxyalkanoate units in which each of n represents an integer different from one another, or a blend of the same can be preferably used. In particular, poly(3-hydroxybutyrate-co-3-hydroxyhexanoate) that is a copolymer of 3-hydroxybutyrate represented by the formula (1) wherein n is 1, and 3-hydroxyhexanoate represented by the formula (1) wherein n is 3 is preferred, in which the composition ratio in terms of 3-hydroxybutyrate/3-hydroxyhexanoate is preferably 80/20 or greater and 99/1 or less (mol/mol). When the composition ratio of 3-hydroxybutyrate/3-hydroxyhexanoate is 99/1 or less, processing is likely to be enabled without heating at a high temperature. In addition, when the composition ratio of 3-hydroxybutyrate/3-hydroxyhexanoate is 80/20 or greater, time period of recrystallization in heat processing is shortened, whereby the productivity is likely to be improved.

The isocyanate compound used in the present invention has preferably two or more isocyanate groups per molecule. Examples of the isocyanate compound include aromatic isocyanate, alicyclic isocyanate, aliphatic isocyanate. More specifically, aromatic isocyanate having a skeleton of tolylene, diphenyl methane, naphthylene, tolidine, xylene or triphenylmethane; alicyclic isocyanate having a skeleton of isophorone or hydrogenated diphenyl methane; aliphatic isocyanate having a skeleton of hexamethylene or lysine, like may be exemplified. Any combination of two or more kinds of these isocyanate compounds can be used. In light of versatility, handleability, weather resistance, the aromatic isocyanate is preferably used. Further, tolylene, and diphenyl methane are more preferred, and polyisocyanate of diphenyl methane is particularly preferred.

The isocyanate compound is added in an amount of preferably equal to or greater than 0.1 parts by weight per 100 parts by weight of P3HA. When this amount is less than 0.1 parts by weight, the film strength of the resin cannot endure the expansion force in foaming to lead breakage of the foamed cell, whereby favorable foam is not likely to be obtained. To the contrary, the upper limit is preferably 10 parts by weight. When the amount exceeds 10 parts by weight, unreacted isocyanate compound may remain, whereby the foamability may rather be deteriorated. The amount is more preferably 0.3 parts by weight or greater and 8 parts by weight or less, and most preferably 0.5 parts by weight or greater and 5 parts by weight or less, in light of the quality, and also of practical applications.

Poly(3-hydroxybutyrate) (PHB) which can be used in the present invention is not particularly limited, and may be obtained by either production in a microorganism, or a synthetic method. Also, the amount of added PHB may be 0.1 to 20 parts by weight per 100 parts by weight of P3HA. When the amount is less than 0.1 parts by weight, the effect of improving the crystallization velocity may be insufficient, whereby shrinkage of the molded product after the molding may be caused. The amount of more than 20 parts by weight leads to economical disadvantage as well as lack in practicality since the effect to meet the blended amount cannot be expected. In addition, PHB preferably has a smaller mean particle diameter The mean particle diameter is preferably equal to or less than 300 $\mu$m, more preferably equal to or less than 100 $\mu$m, still more preferably equal to or less than 50 $\mu$m, even more preferably equal to or less than 10 $\mu$m, and most preferably equal to or less than 5 $\mu$m. The mean particle diameter of PHB larger than 300 $\mu$m is not preferred since uniform dispersion of PHB in the P3HA resin composition is difficult. In order to allow fine crystal nuclei to be micro-dispersed in the composition, the particle size is preferably equal to or less than 300 $\mu$m.

The P3HA resin composition of the present invention includes P3HA and an isocyanate compound, and preferably, further includes PHB. The P3HA resin composition has a melting temperature (Tm1). When multiple melting peaks are present, the melting temperature at the peak for the greatest melting calorie is defined as Tm1. The melt viscosity of the P3HA resin composition is equal to or greater than 500 Pa·s, preferably equal to or greater than 1000 Pa·s, and more preferably equal to or greater than 1500 Pa·s measured under a condition of a shear rate of 122 see$^{-1}$, at a temperature of Tm1 or greater and Tm2 or less (wherein, Tm2 = Tm1 + 20°C; and Tm2 < 180°C). When the melt viscosity is less than 500 Pa·s, the film strength of the resin cannot endure the expansion force in foaming to lead breakage of the foamed cell because of too low viscosity, whereby favorable foam cannot be obtained. The upper limit of the melt viscosity is not particularly limited as long as the viscosity falls within the range to provide thermoplastic characteristics of the resin composition of the present invention, but is, for example, preferably less than 10000 Pa·s. Additionally, since the foaming agent plasticizes the resin in actual foaming processes, there may be a case in which a temperature lower than the melting temperature of the P3HA resin composition corresponds to an optimal foaming temperature. However, melting characteristics in actual foaming are herein evaluated with melt viscosity under a condition at a temperature of Tm1 or greater and Tm2 or less (wherein, Tm2 = Tm1 + 20°C, and Tm2 < 180°C) of the P3HA resin composition which is unimpregnated with a foaming agent. Favorable foamability is exhibited when the P3HA has a melt viscosity of equal to or greater than 500 Pa·s at a temperature in the range of Tm1 or greater and Tm2 or less.

The gel fraction of the P3HA resin foamed particles in the present invention is preferably greater than 80%, and more preferably greater than 90%. When the gel fraction is less than 80% in attempts to obtain foamed particles having a high expansion ratio, the resin film cannot endure the pressure in foaming to lead breakage of the foamed cell, whereby a favorable molded product may not be obtained.

The gel fraction referred to herein is measured as follows. In a 150-ml flask are charged about 1 g of crosslinked resin particles, foamed particles or a molded product of foamed particles, and 100 ml of chloroform, and the mixture is refluxed by heating under an ambient pressure for 8 hrs. Thereafter, the resulting product treated with heat is filtrated using a suction filtration apparatus having a 200-mesh wire netting. The resulting filtrated matter on the wire netting is dried in an 80°C oven under a vacuum condition at 760 Torr for 8 hrs. The weight W1 of the dried matter obtained in this procedure is measured. The weight proportion (W1/W2 x 100%) of the weight W1 to the weight W2 of the crosslinked resin particles W2 is defined as the gel fraction.

To the P3HA resin composition in the present invention may be added various additives in the range not to hamper required performances of the resulting foamed particles. Exemplary additives may include e.g., antioxidants, ultraviolet ray absorbing agents, colorants such as dyes and pigments, plasticizers, lubricants, crystallization nucleating agents, inorganic fillers. These can be used depending on the intended use, and among all, additives which exhibit biodegradability are preferred. Examples of the additive include inorganic compounds such as silica, talc, calcium silicate, wollastonite, kaolin, clay, mica, zinc oxide, titanium oxide and silicon dioxide, fatty acid metal salts such as sodium stearate, magnesium stearate, calcium stearate and barium stearate, liquid paraffin, olefin-based wax, stearylamide-based compounds, but not limited thereto. Moreover, when regulation of the cell diameter of the foamed particles is needed, a cell regulator is added. As the cell regulator, inorganic nucleating agents such as talc, silica, calcium silicate, calcium carbonate, aluminum oxide, titanium oxide, diatomaceous earth, clay, sodium bicarbonate, alumina, barium sulfate, aluminum oxide, bentonite may be exemplified Generally, the amount of the used cell regulator which may be added is 0.005 parts by weight or greater and 2 parts by weight or less.

The method of producing the P3HA resin foamed particles according to the present invention will be described below. In production of the P3HA resin foamed particles, the isocyanate compound and P3HA to be the substrate resin, and preferably PHB are first subjected to heat fusion and kneading using an extruder, a kneader, a banbury mixer, a roll , and then molding the kneaded mixture into a particulate shape which can be readily utilized in the foaming of the present invention such as a cylindrical, elliptic cylindrical, spherical, cubic, or rectangular prism shape to obtain the P3HA resin particles for use. The weight of one particle is preferably equal to or greater than 0.1 mg, and more preferably equal to or greater than 0.5 mg. When the weight is less than 0.1 mg, production of the P3HA resin particle of itself may be difficult.

The P3HA resin foamed particles are produced by allowing thus resulting P3HA resin particles to be dispersed in an aqueous dispersion medium in an airtight container together with a dispersant; introducing a foaming agent into the airtight container; heating to not lower than the softening temperature of the P3HA resin composition; then keeping at around the foaming temperature if necessary for a predetermined time; and thereafter opening one end of the airtight container so as to release the P3HA resin particles and the aqueous dispersion medium to an atmosphere with a pressure lower than the pressure in the airtight container.

As the aforementioned dispersant, an inorganic substance such as tribasic calcium phosphate, calcium pyrophosphate, kaolin, basic magnesium carbonate, aluminum oxide or basic zinc carbonate is used in combination with an anionic surfactant such as e.g., sodium dodecylbenzenesulfonate, sodium α-olefin sulfonate, sodium n-paraffin sulfonate. In general, the amount of the inorganic substance is 0.1 parts by weight or greater and 3.0 parts by weight or less per 100 parts by weight of the P3HA resin composition, while the amount of the used anion surfactant is 0.001 parts by weight or greater and 0.2 parts by weight or less per 100 parts by weight of the P3HA resin composition. It is preferred that the dispersion medium be usually water in light of the economical efficiency and handleability, but not limited thereto.

Examples of the aforementioned foaming agent include saturated hydrocarbons having 3 to 5 carbon atoms such as propane, n-butane, isobutane, n-pentane, isopentane and neopentane, ethers such as dimethyl ether, diethyl ether and methylethyl ether, halogenated hydrocarbons such as monochloromethane, dichloromethane and dichlorodifluoroethane, inorganic gases such as carbon dioxide, nitrogen and air, water. At least one of these can be used. Taking into consideration the environmental compatibility, a saturated hydrocarbon, an ether, an inorganic gas, or water is preferably used as the foaming agent. The amount of addition of the foaming agent varies depending on expansion ratio of intended preliminary foamed particles, type of the foaming agent, type of the polyester-based resin, proportion of the resin particles and the dispersion medium, void volume of the container, impregnation or foaming temperature but in general, the amount falls within the range of 2 to 1000 parts by weight per 100 parts by weight of the P3HA resin particles.

The resin foamed particles obtained by the method described above are, if necessary, subjected to compression aging by compressed air thereby imparting foamability to the resin foamed particles, and charged in a mold which can be closed but cannot be sealed. Subsequently, water vapor is fed into the mold to heat and fuse the resin foamed particles, whereby the resin-foamed molded product of the P3HA resin particles is produced.

EXAMPLES

The present invention will be more specifically explained by way of Examples shown below, but the present invention is not anyhow limited to these Examples. In Examples, "part" is based on the weight. The materials used in the present invention are abbreviated as in the following.
P3HA: poly(3-hydroxyalkanoate)

PHBH: poly(3-hydroxybutyrate-co-3-hydroxyhexanoate)
PHB: poly(3-hydroxybutyrate)
HH rate: molar fraction (% by mole) of hydroxyhexanoate in PHBH

Measurement Method of Melting Temperature of P3HA Resin Particle

Differential scanning calorimetry was carried out by precisely weighing about 5 mg of the P3HA resin particles of Examples, elevating the temperature from 0°C to 200°C at a rate of temperature rise of 10°C/min with a differential scanning calorimeter (manufactured by Seiko Electronics Co., Ltd., SSC5200) to obtain a DSC curve. The peak temperature in the heat absorption curve was determined as the melting temperature Tm1 (When multiple peaks are present, the melting temperature at the peak for the greatest melting calorie is defined as Tm1).

Measurement Method of Melt Viscosity of P3HA Resin Composition

The melt viscosity of the P3HA resin composition was determined using a 1 mmφ x 10 mm die with Capirograph (manufactured by Toyo Seiki Seisaku-sho, Ltd.) at Tm + 8°C or Tm + 15°C based on Tm1 measured as described above, and at a shear rate 122 sec$^{-1}$. The melt viscosity was evaluated as follows:

   A: melt viscosity being equal to or greater than 500 Pa·s; and
   B: melt viscosity not being less than 500 Pa·s.

Measurement Method of Expansion Ratio of P3HA Resin Foamed Particles and Molded Product

Five hundred or more P3HA resin foamed particles B, or P3HA resin-foamed molded product C cut into an appropriate size (weight: W (g)) which had been left to stand under a condition with a relative humidity of 50%, at 23°C and 1 atm for 7 days were placed in a graduated cylinder charged with ethanol of 23°C so as to allow them to submerge using a wire mesh or the like. Provided that the volume of the foamed particles or of the molded product read from the elevated ethanol level is defined as V (cm$^3$), the expansion ratio is determined with a resin density $\rho$ (g/cm$^3$) according to the following formula:

$$\text{Expansion ratio} = V/(W/\rho).$$

Measurement Method of Closed Cell Rate of P3HA Resin-Foamed Molded Product

The closed cell rate was measured with Multipicnometer (manufactured by Beckmann Japan Co., Ltd.), according to ASTM D-2856.

Biodegradability of P3HA Resin Foamed Particles

Six months after burying the P3HA resin foamed particles of Examples 10 cm under the ground, change in the shape was observed to evaluate the degradability according to the following standards:

   A: substantial part degraded to the extent that the shape can be hardly identified; and
   C: almost no change in the shape found and the foamed particles observed, suggesting no degradation.

Gel Fraction of P3HA Resin Foamed Particles

In a 150-ml flask are charged about 1 g of the P3HA resin foamed particles, and 100 ml of chloroform, and the mixture was refluxed by heating under an ambient pressure for 8 hrs. Thereafter, the resulting product treated with heat is filtrated using a suction filtration apparatus having a 200-mesh wire netting. The resulting filtrated matter on the wire netting is dried in an 80°C oven under a vacuum condition at 760 Torr for 8 hrs. The weight W1 of the dried matter obtained in this procedure is measured. The weight proportion (W1/W2 x 100%) of the weight W1 to the weight W2 of the crosslinked resin particles W2 is defined as the gel fraction.

Heat Molding Range

A: available water vapor pressure range in molding being equal to or greater than 0.05 MPa (gauge);
B: available water vapor pressure range in molding being 0.01 MPa (gauge) or greater and less than 0.05 MPa (gauge); and
C: available water vapor pressure range in molding being less than 0.01 MPa (gauge)

Shrinkage of Molded Product After Molding

A: not any shrinkage found;
B: some shrinkage found: and
C: shrinkage found.

Example 1

After blending by hand 4 parts by weight of a polyisocyanate compound (manufactured by Nippon Polyurethane Industry Co., Ltd., Millionate MR-200 (isocyanate group: 2.7 to 2.8 eq./mol)), 5 parts by weight of PHB and 95 parts by weight of PHBH having an HH rate of 12% by mole produced using as a microorganism Alcaligenes eutrophus AC32 (J. Bacteriol., 179, 4821 (1997)), which had been prepared by introducing a PHA synthase gene derived from Aeromonas caviae into Alcaligenes eutrophus, through appropriately adjusting the raw material and culture conditions, the mixture was melt-kneaded in a φ35 mm single screw extruder equipped with a kneader (manufactured by Kasamatsu Kako Kenkyusho Inc., universal extruder for laboratory use) at a cylinder temperature of 145°C. The strand extruded through a small die opening of 3 mmφ attached to the extruder tip was cut by a pelletizing machine to produce a PHBH resin composition A having a particle weight of 5 mg, and a melting temperature of 135°C. The melt viscosity of the resin composition A determined at a shear rate of 122 sec$^{-1}$, and 150°C (= Tm1 + 15°C) was 7600 Pa·s.

After charging 100 parts by weight of the resin composition A in a 4.5-L pressure tight container, 25 parts by weight of isobutane as the foaming agent was added thereto and stirred. After elevating the temperature such that the internal temperature of the container became 119°C (to give the foaming temperature), the container was kept in a state with the internal pressure being 1.8 MPa for 1 hour. Then, the mixture was released to an ambient pressure to permit expansion by passing through a nozzle with a small hole provided at the bottom of the pressure tight container. Accordingly, PHBH resin foamed particles B having an expansion ratio of 18 times and a closed cell rate of 98% were obtained. The PHBH resin foamed particles B had a gel fraction of 93%.

The PHBH resin foamed particles B were charged in a mold of 300 x 400 x 30 mm, and to the mold was fed water vapor of 0.23 to 0.35 MPa (gauge), whereby the PHBH resin foamed particles B were heated to permit fusion, and thus a PHBH resin-foamed molded product C having an expansion ratio of 20 times, a closed cell rate of 91% was obtained. In addition, the PHBH resin-foamed molded product C exhibited no post mold shrinkage at all. Further, the obtained PHBH resin-foamed molded product C had favorable appearance such as the surface state. The results are shown in Table 1.

Example 2

The process was carried out in a similar manner to Example 1 except that the polyisocyanate compound was added in an amount of 3 parts by weight in the PHBH resin composition A, and that the foaming was carried out at a temperature in the vessel of 131°C. The resin composition A had a melt viscosity of 6200 Pa·s determined at a shear rate of 122 sec$^{-1}$ and at 150°C (= Tm1 + 15°C). This resin composition A was used in foaming to obtain PHBH resin foamed particles B having an expansion ratio of 28 times and a closed cell rate of 96%. The PHBH resin foamed particles B had a gel fraction of 95%. Furthermore, thereto was fed water vapor of 0.17 to 0.30 MPa (gauge) to permit heating and fusion, and thus a PHBH resin-foamed molded product C having an expansion ratio of 29 times and a closed cell rate of 92% was obtained. In addition, the PHBH resin-foamed molded product C exhibited no post mold shrinkage at all. Further, the obtained PHBH resin-foamed molded product C had favorable appearance such as the surface state. The results are shown in Table 1.

Example 3

The process was carried out in a similar manner to Example 1 except that only the PHBH resin was used. The resin composition A had a melt viscosity of 5630 Pa·s determined at a shear rate of 122 sec$^{-1}$ and at 150°C (= Tm1 + 15°C). This resin composition A was used in foaming to obtain PHBH resin foamed particles B having an expansion ratio of 13 times, and a closed cell rate of 99%. The PHBH resin foamed particles B had a gel fraction of 49%. - Furthermore, thereto was fed water vapor of 0.23 to 0.35 MPa (gauge) to permit heating and fusion, and thus a PHBH resin-foamed molded product C having an expansion ratio of 14 times and a closed cell rate of 99% was obtained. In addition, although the PHBH resin-foamed molded product C exhibited some shrinkage after the production, it had favorable appearance such as the surface state. The results are shown in Table 1.

Comparative Example 1

The process was carried out in a similar manner to Example 1 except that only the PHBH resin was used, and the polyisocyanate compound was not added. The resin composition A had a melt viscosity of 400 Pa·s determined at a shear rate of 122 sec$^{-1}$ and at 150°C (= Tm1 + 15°C). This resin composition A was used in foaming to obtain PHBH resin foamed particles B having an expansion ratio of 13 times and a closed cell rate of 53%. The gel fraction was 0%. In addition, when the foamed particles were obtained, the crystallization proceeded slowly, whereby blocking of the foamed particles was observed. Furthermore, thereto was fed water vapor of 0.02 MPa (gauge) to permit heating; however, the PHBH resin foamed particles B were greatly shrinked, whereby a favorable PHBH resin-foamed molded product C could not be obtained. Moreover, this resin exhibited satisfactory biodegradability. The results are shown in Table 1.

Comparative Example 2

The process was carried out in a similar manner to Example 1 except that the polyisocyanate compound was not added. The resin composition A had a melt viscosity of 2360 Pa·s determined at a shear rate of 122 sec$^{-1}$ and at 150°C (= Tm1 + 15°C). This resin composition A was used in foaming to obtain PHBH resin foamed particles B having an expansion ratio of 20 times and a closed cell rate of 32%. The gel fraction was 0%. Furthermore, thereto was fed water vapor of 0.02 MPa (gauge) to permit heating; however, the PHBH resin foamed particles B were greatly shrinked, whereby a favorable PHBH resin-foamed molded product C could not be obtained. Moreover, this resin exhibited satisfactory biodegradability. The results are shown in Table 1.

Table 1

| Item | unit | Ex. 1 | Ex. 2 | Hex. 3 | Compar. Ex. 1 | Compar. Ex. 2 |
|---|---|---|---|---|---|---|
| PHBH | part by weight | 95 | 95 | 100 | 100 | 95 |
| PHB | part by weight | 5 | 5 | | | 5 |
| pMDI | part by weight | 4 | 3 | 4 | | |
| Tm of resin composition | °C | 135 | 135 | 135 | 135 | 135 |
| Melt viscosity of resin composition | Pa·s | 7600 | 6200 | 5630 | 400 | 2360 |
| Expansion ratio of foamed particles | time | 18 | 28 | 13 | 13 | 20 |
| Closed cell rate of foamed particles | % | 98 | 96 | 99 | 53 | 32 |
| Gel fraction of foamed particles | % | 93 | 95 | 49 | 0 | 0 |
| Heat molding range | | A | A | A | C | C |
| Shrinkage of molded product after molding | | A | A | B | C | C |
| Expansion ratio of foamed molded product | time | 20 | 29 | 14 | - | - |
| Closed cell rate of foamed molded product | % | 91 | 92 | 99 | - | - |
| Biodegradability | | A | A | A | A | A |

Industrial Applicability

When the poly(3-hydroxyalkanoate) resin foamed particles having a given melt viscosity of the present invention are used, a P3HA resin-foamed molded product can be stably obtained with a wide range of variation of processing in the molding; and to obtain a foamed product, at a high expansion ratio, which exhibits biodegradability, and is accompanied by no post mold shrinkage is enabled. Therefore, the present invention is useful in the industry of foamed products such as packaging materials.

**Claims**

1.  P3HA resin foamed particles comprising a P3HA resin composition that includes poly(3-hydroxybutyrate) (hereinafter, abbreviated to PHB), and a copolymer (hereinafter, poly(3-hydroxyalkanoate): abbreviated to P3HA) having one or more kinds of recurring unit(s) represented by the formula (1):

    $$- [-O-CHR-CH_2-CO-]$$

    (wherein, R is an alkyl group represented by $C_nH_{2n+1}$, wherein n is an integer of from 1 to 15) produced by a microorganism; and an isocyanate compound,
    the P3HA resin composition having a melt viscosity of equal to or greater than 500 Pa·s measured under a condition of a shear rate of 122 $s^{-1}$, at Tm1 or higher and Tm2 or lower, wherein Tm1 is the melting temperature of the P3HA resin composition; Tm2 = Tm1 + - 20°C; and Tm2 < 180°C

2.  The P3HA resin foamed particles according to claim 1 wherein the P3HA is poly(3-hydroxybutyrate-co-3-hydroxyhexanoate) (hereinafter, abbreviated to PHBH) - composed of a monomer wherein n is 1 and 3.

3.  The P3HA resin foamed particles according to claims 1 or 2 wherein the P3HA resin foamed particles have a gel fraction of greater than 80%.

4.  The P3HA resin foamed particles according to any one of claims 1 to 3 wherein the P3HA resin foamed particles have a composition ratio of the components of the PHBH copolymer in terms of 3-hydroxybutyrate/3-hydroxyhexanoate being 80/20 or greater and 99/1 or less (mol/ mol).

5.  A molded product of P3HA resin foamed particles obtained by charging the P3HA resin foamed particles according to any one of claims 1 to 4 into a mold, followed by heat molding.

6.  A method of producing the P3HA resin foamed particles according to any one of claims 1 to 4 comprising: allowing resin parties, which are composed of a P3HA resin composition as a substrate resin, to be dispersed in an aqueous dispersion medium in an airtight container together with a dispersant; introducing a foaming agent into the airtight container; heating to not lower than the softening temperature of the substrate resin; and thereafter opening one end of the airtight container so as to release the resin particles and the aqueous dispersion medium to an atmosphere with a pressure lower than the pressure in the airtight container, thereby allowing the resin particles to be foamed.

**Patentansprüche**

1.  Geschäumte P3HA-Harzpartikel, umfassend eine P3HA-Harzzusammensetzung, die Poly(3-hydroxybutyrat) (im Folgenden als PHB abgekürzt) und ein Copolymer (im Folgenden Poly(3-hydroxyalkanoat): abgekürzt als P3HA) mit einer oder mehreren Art(en) von sich wiederholenden, durch die Formel (1) dargestellten Einheit(en):

    $$[-O-CHR-CH_2-CO-]$$

    (wobei R ein durch $C_nH_{2n+1}$ dargestellter Alkylrest ist, wobei n eine ganze Zahl von 1 bis 1 ist) hergestellt durch einen Mikroorganismus; und eine Isocyanatverbindung einschließt, wobei die P3HA-Harzzusammensetzung eine Schmelzviskosität von 500 Pa·s oder größer aufweist, gemessen unter der Bedingung einer Scherrate von 122 $s^{-1}$, bei Tm1 oder höher und Tm2 oder niedriger, wobei Tm1 die Schmelztemperatur der P3HA-Harzzusammensetzung ist; Tm2 = Tm1 + 20°C; und Tm2 < 180°C.

2. Die geschäumten P3HA-Harzpartikel gemäß Anspruch 1, wobei das P3HA Poly(3-hydroxybutyrat-co-3-hydroxyhexanoat) (im Folgenden abgekürzt als PHBH) ist, das aus einem Monomer, in dem n gleich 1 und 3 ist, zusammengesetzt ist.

3. Die geschäumten P3HA-Harzpartikel gemäß Anspruch 1 oder 2, wobei die geschäumten P3HA-Harzpartikel einen Gelanteil von größer als 80% aufweisen.

4. Die geschäumten P3HA-Harzpartikel gemäß einem der Ansprüche 1 bis 3, wobei die geschäumten P3HA-Harzpartikel ein Verhältnis der Zusammensetzung der Komponenten des PHBH-Copolymers in Bezug auf 3-Hydroxybutyrat/3-Hydroxyhexanoat von 80/20 oder größer und 99/1 oder weniger (Mol/Mol) aufweisen.

5. Ein geformtes Erzeugnis aus geschäumten P3HA-Harzpartikeln, erhalten durch Laden der geschäumten P3HA-Harzpartikel gemäß einem der Ansprüche 1 bis 4 in eine Form, gefolgt von Heißformen.

6. Ein Verfahren zur Herstellung der geschäumten P3HA-Harzpartikel gemäß einem der Ansprüche 1 bis 4, umfassend: Dispergieren lassen der Harzpartikel, die eine P3HA-Harzzusammensetzung als Harzsubstrat umfassen, zusammen mit einem Dispergiermittel in einem wässrigen Dispersionsmedium in einem luftdichten Behälter; Einbringen eines Schaumbildners in den luftdichten Behälter; Erwärmen auf nicht niedriger als die Erweichungstemperatur des Substratharzes; und danach Öffnen von einem Ende des luftdichten Behälters, um so die Harzpartikel und das wässrige Dispersionsmedium in einer Atmosphäre freizusetzen, deren Druck niedriger als der Druck in dem luftdichten Behälter ist, um **dadurch** die Partikel schäumen zu lassen.

## Revendications

1. Particules expansées de résine P3HA comprenant une composition de résine P3HA qui inclut du poly(3-hydroxybutyrate) (abrégé ici PHB), et un copolymère (ici, poly(3-hydroxyalcanoate) : abrégé P3HA) ayant un ou plusieurs types d'unités récurrentes représentées par la formule (1) :

$$[-O-CHR-CH_2-CO-]$$

(dans laquelle R est un groupe alkyle représenté par $C_nH_{2n+1}$, où n est un entier de 1 à 15), produit par un microorganisme ; et un composé isocyanate,
la composition de résine P3HA ayant une viscosité à l'état fondu égale ou supérieure à 500 Pa•s mesurée dans des conditions de taux de cisaillement de 122 sec$^{-1}$, à une température supérieure ou égale à Tm1 et inférieure ou égale à Tm2, où Tm1 est la température de fusion de la composition de résine P3HA ; Tm2=Tm1+20°C ; et Tm2<180°C.

2. Particules expansées de résine P3HA selon la revendication 1, le P3HA étant du poly(3-hydroxybutyrate-co-3-hydroxyhexanoate) (ici, abrégé PHBH) composé d'un monomère dans lequel n vaut 1 et 3.

3. Particules expansées de résine P3HA selon la revendication 1 ou 2, les particules expansées de résine P3HA ayant une fraction gel supérieure à 80%.

4. Particules expansées de résine P3HA selon l'une quelconque des revendications 1 à 3, les particules expansées de résine P3HA ayant un rapport de composition des composants du copolymère PHBH en termes de 3-hydroxybutyrate/3-hydroxyhexanoate qui est supérieur ou égal à 80/20 et inférieur ou égal à 99/1 (mol/mol).

5. Produit moulé de particules expansées de résine P3HA obtenu par le chargement des particules expansées de résine P3HA selon l'une quelconque des revendications 1 à 4 dans un moule, suivi d'un moulage par la chaleur.

6. Procédé de production des particules expansées de résine P3HA selon l'une quelconque des revendications 1 à 4 comprenant les étapes consistant à : permettre la dispersion des particules de résine, qui sont composées d'une composition de résine P3HA en tant que résine substrat, dans un milieu de dispersion aqueux dans un conteneur hermétique avec un dispersant ; introduire un agent d'expansion dans le conteneur hermétique ; chauffer à une température pas inférieure à la température de ramollissement de la résine substrat ; et ensuite ouvrir une extrémité du conteneur hermétique de sorte à libérer les particules de résine et le milieu de dispersion aqueux dans une atmosphère avec une pression inférieure à la pression dans le conteneur hermétique, permuttant ainsi l'expansion des particules de résine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI10324766 B
- JP 2001106821 A
- JP 2004010798 A
- JP HEI6248106 B
- JP 11021915 A
- JP 2000169546 A
- JP 2000017039 A
- JP 2000230029 A
- JP 2001098044 A

- JP 2002327037 A
- JP 2003253107 A
- JP 2004107430 A
- JP 2004107505 A
- JP 2004149649 A
- JP 2000319438 A
- JP 2006307549 W
- US 20020035231 A

**Non-patent literature cited in the description**

- *J. Bacteriol.,* 1997, vol. 179, 4821